# EUROPEAN PATENT SPECIFICATION

(11) **EP 3 168 640 B1**
(45) Date of publication and mention of the grant of the patent: **14.08.2019**
(21) Application number: 16198745.8
(22) Date of filing: 14.11.2016
(51) Int. Cl.: G01S 15/93, G01S 7/53, G01S 15/87, G01S 15/89

(54) **OBSTACLE MAPPING IN A VEHICLE**
HINDERNIS-MAPPING IN EINEM FAHRZEUG
CARTOGRAPHIE D'OBSTACLES DANS UN VÉHICULE

(30) Priority: 13.11.2015 IT UB20155579
(43) Date of publication of application: 17.05.2017
(73) Proprietor: Vodafone Automotive S.p.A., 21100 Varese (VA) (IT)
(72) Inventor: BAITINI, Mario, London, W2 6BY (GB); CLERICI, Ubaldo, London, W2 6BY (GB)
(74) Representative: Boult Wade Tennant LLP

(56) References cited:
- US-A- 6 163 252
- US-A1- 2005 179 581
- US-A1- 2015 138 358

## Description

This invention relates to a method and apparatus for obstacle mapping in a vehicle.

### BACKGROUND

In recent years, vehicle park assistance systems have been developed. A camera-based system provides a camera which captures images of the environment in the vicinity of the vehicle. The image contains information about the position of obstacles, but no distance data is provided. Typically, the image is presented to the driver via an on-board display screen, and the driver is responsible for judging which obstacles need be avoided and guessing the distance to an obstacle observed in the image. Typically, the obstacles themselves are not segregated from the rest of the image.

An alternative system uses a sensor-based system having a sensor mounted on the vehicle and arranged to send and receive acoustic pulses which reflect off any facing surfaces of obstacles in the vicinity of the vehicle. Such systems are capable of providing an estimate of the distance to an obstacle, but are typically unable to assess with accuracy where the obstacle is located. Such systems may be coupled with an audible/visual warning to draw the driver's attention to an obstacle which may be close to the vehicle. The sensors used are typically ultrasonic sensors (otherwise known as sonar). Electromagnetic sensors may also be provided that create a sensor field around a bumper of a vehicle.

GB 2506961 A discloses an environment sensing system of a vehicle operating in a multistatic sonar configuration. The system comprises a transmitter/receiver and a second receiver. The system locates obstacles by associating received reflections of similar amplitudes with the same obstacle.

The present application seeks to provide at least an alternative to environmental sensing systems for vehicles of the prior art. US 2005/179581 A1 describes a radar device for obtaining position data. US 6 163 252 A describes a device for detecting obstacles, for use in vehicles. US 2015/138358 A1 describes an obstacle map generation apparatus and method using an ultrasonic sensor.

### BRIEF SUMMARY OF THE DISCLOSURE

In accordance with the present invention there is provided apparatus for obstacle mapping in a vehicle. The apparatus comprises a memory configured to store a location matrix and an obstacle matrix, each representative of an area around the vehicle and a logical module configured to receive a plurality of sensor signal datasets from a plurality of respective ultrasound sensors, each sensor signal dataset comprising at least one amplitude value having a respective at least one associated distance value. The logical module is further configured to modify the location matrix by superposing each amplitude value of each sensor signal dataset on the location matrix at all locations representative of a possible obstacle location based on the associated respective distance value and a location of the respective sensor. The logical module is further configured to determine an initial shaped obstacle as a peak location corresponding to a maximum value in the location matrix. The logical module is further configured to determine a final shaped obstacle based on recursively determining locations in the location matrix around the initial shaped obstacle having a value within a predetermined threshold of the maximum value and expanding the initial shaped obstacle to include the determined locations. The logical module is further configured to populate the obstacle matrix based on the final shaped obstacle. The logical module is further configured to, after the final shaped obstacle has been determined, calculate a further location matrix not including at least some of the amplitude values in the sensor signal datasets which represented a possible obstacle location at the peak location, whereby to identify any remaining peaks in the further location matrix indicative of a further obstacle.

In embodiments, the logical module may be further configured to determine a current location matrix as the further location matrix and recursively: determine a current initial shaped obstacle as a current peak location corresponding to a current maximum value in the current location matrix; determine a current final shaped obstacle based on recursively determining locations in the current location matrix around the current initial shaped obstacle having a value within the predetermined threshold of the current maximum value and expanding the current initial shaped obstacle to include the determined locations; further populate the obstacle matrix based on the current final shaped obstacle; and after the current final shaped obstacle has been determined, calculate a new current location matrix not including at least some of the amplitude values in the sensor signal datasets which represented a possible obstacle location at the current peak location, whereby to identify any remaining peaks in the new current location matrix indicative of a further obstacle.

The logical module may be configured to stop calculating the new current obstacle matrix after a predetermined number of recursions. The logical module may be configured to stop calculating the new current obstacle matrix when the current maximum value is less than a predetermined threshold.

Each sensor signal dataset may have associated therewith a sensor emitter location and a sensor receiver location. In at least some of the sensor signal datasets, the sensor emitter location may be spaced from the sensor receiver location.

For at least one sensor signal dataset having a sensor emitter location spaced from the sensor receiver location, the sensor emitter location may be substantially identical to a sensor receiver location for a further sensor signal dataset.

The location matrix and the obstacle matrix may both be two dimensional arrays.

The peak location may correspond to a maximum value in a region of the location matrix.

The apparatus may further comprise the sensors.

An embodiment extends to a vehicle or one or more components thereof comprising the apparatus.

In accordance with the present invention there is provided a method of obstacle mapping in a vehicle. The method comprises storing, in a memory, a location matrix and an obstacle matrix, each representative of an area around the vehicle, receiving a plurality of sensor signal datasets from a plurality of respective ultrasound sensors, each sensor signal dataset comprising at least one amplitude value having a respective at least one associated distance value, modifying the location matrix by superposing each amplitude value of each sensor signal dataset on the location matrix at all locations representative of a possible obstacle location based on the associated respective distance value and a location of the respective sensor, determining an initial shaped obstacle as a peak location corresponding to a maximum value in the location matrix, determining a final shaped obstacle based on recursively determining locations in the location matrix around the initial shaped obstacle having a value within a predetermined threshold of the maximum value and expanding the initial shaped obstacle to include the determined locations, populating the obstacle matrix based on the final shaped obstacle, and, after the final shaped obstacle has been determined, calculating a further location matrix not including at least some of the amplitude values in the sensor signal datasets which represented a possible obstacle location at the peak location, whereby to identify any remaining peaks in the further location matrix indicative of a further obstacle.

In an embodiment, the method may further comprise the steps of: determining a current location matrix as the further location matrix, and recursively: determining a current initial shaped obstacle as a current peak location corresponding to a current maximum value in the current location matrix; determining a current final shaped obstacle based on recursively determining locations in the current location matrix around the current initial shaped obstacle having a value within the predetermined threshold of the current maximum value and expanding the current initial shaped obstacle to include the determined locations; further populating the obstacle matrix based on the current final shaped obstacle; and after the current final shaped obstacle has been determined, calculating a new current location matrix not including at least some of the amplitude values in the sensor signal datasets which represented a possible obstacle location at the current peak location, whereby to identify any remaining peaks in the new current location matrix indicative of a further obstacle.

In accordance with the present invention there is provided a computer-readable medium, optionally non-transitory, comprising instructions which, when executed on the apparatus, cause one or more processors to implement the logical module defined previously.

### BRIEF DESCRIPTION OF THE DRAWINGS

Embodiments of the invention are further described hereinafter with reference to the accompanying drawings, in which:
Figure 1 is a flow chart illustrating steps of a method in accordance with an aspect of the present disclosure;
Figure 2 is a diagram of three obstacles positioned in the vicinity of a vehicle, viewed from a plan view;
Figure 3 is an illustration of the obstacles shown in Figure 2, shown in the vicinity of the vehicle;
Figure 4 is a diagram showing monostatic response plots for each of the sensor locations A to D for the setup shown in Figures 2 and 3;
Figure 5 is a diagram showing bistatic response plots for the sensor pairs A-B, C-B and D-C for the setup shown in Figures 2 and 3;
Figure 6 is a diagram showing plots of a location matrix including responses relating to obstacles observed from sensors A to D, and plots of the extracted obstacles for the setup shown in Figures 2 and 3;
Figure 7 is a diagram showing plots of the location matrix showing the location matrix as responses originating from identified obstacles are progressively not included, for the setup shown in Figures 2 and 3;
Figure 8 is a plot showing an obstacle map resulting from the extraction of obstacles seen in Figure 6; and
Figure 9 is a diagram of a system in accordance with an aspect of the present disclosure.

### DETAILED DESCRIPTION

The present disclosure relates to a method and apparatus for obstacle mapping in an area around a vehicle. The disclosed method and apparatus allows an indication of the 2D location of obstacles to be determined. The location of obstacles may be presented visually to a driver, or may be used as an input to an electronic navigation system within the vehicle.

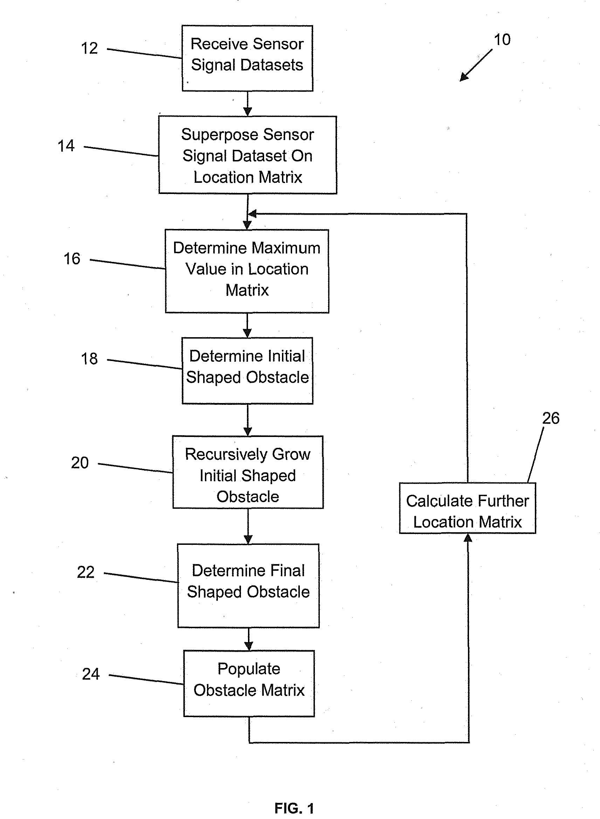

Figure 1 is a flow chart illustrating steps of a method in accordance with an aspect of the present disclosure. The method 10 is a method for obstacle mapping in an area around a vehicle. The method 10 comprises, in order, a first step 12, referred to as "Receive Sensor Signal Datasets", a second step 14, referred to as "Superpose Sensor Signal Dataset on Location Matrix", a third step 16, referred to as "Determine Maximum Value in Location Matrix", a fourth step 18, referred to as "Determine Initial Shaped Obstacle", a fifth step 20, referred to as "Recursively Grow Initial Shaped Obstacle", a sixth step 22, referred to as "Determine Final Shaped Obstacle" and a seventh step 24, referred to as "Populate Obstacle Matrix". The method 10 further comprises a feedback step 26, referred to as "Calculate Further Location Matrix", occurring after the seventh step 24 and feeding back into the method 10 between the second step 14 and the third step 16. In this way, the third step 16, the fourth step 18, fifth step 20, sixth step 22 and seventh step 24 may be iterated again with updated variables each time the feedback step 26 is performed.

The first step 12, referred to as "Receive Sensor Signal Datasets" requires receiving a plurality of sensor signal datasets from a plurality of respective sensors. Each sensor signal dataset comprises at least one amplitude value having a respective at least one associated distance value. In one embodiment, the sensors are ultrasound sensors and comprise an ultrasound transmitter and an ultrasound receiver substantially co-located. For example, the ultrasound transmitter may be located adjacent to the ultrasound receiver in the ultrasound sensor. The ultrasound transmitter is configured to emit sound waves (from infrasound up to ultrasound), in the form of a sound wave of a frequency above 20,000 hertz. The ultrasound receiver is configured to receive ultrasound energy emitted from the same ultrasound transmitter, which has been reflected by at least one obstacle located in the vicinity of the vehicle. This can be referred to as a "monostatic" configuration. In some embodiments, the ultrasound receiver is configured to receive ultrasound energy emitted from an ultrasound transmitter of a further sensor. This can be referred to as a "bistatic" configuration. In some embodiments, the ultrasound receiver is configured to separately receive ultrasound energy emitted from a plurality of ultrasound transmitters of a plurality of respective ultrasound sensors. This can be referred to as a "multistatic" configuration. The ultrasound receiver may be configured to output an amplitude value and an associated distance value. In some embodiments, the ultrasound receiver may, instead of the associated distance value, indicate an associated time value. The time value is typically a time difference between the transmission of an ultrasound pulse and the reception of the reflected utrasound pulse. It will be appreciated that time and distance may be converted between each other when the speed of sound in the medium through which the ultrasound energy has travelled is known. In most cases, the medium will be air, which has an approximate speed of sound of 343 metres per second at a temperature of 20 degrees Celsius. Nevertheless, it will be appreciated that variations in the speed of sound are relatively small, and can be accounted for if required using known methods. In a further embodiment, the ultrasound receiver may be configured to output a plurality of amplitude values along with a plurality of associated distance (or time) values.

In summary, a single sensor signal dataset may comprise information about the strength of reflection in the direction of the ultrasound receiver of an obstacle illuminated by ultrasound energy from the ultrasound transmitter, in addition to information about the distance travelled by the ultrasound energy from the transmitter to the receiver via the reflecting surface of the obstacle.

At this point, the received ultrasound sensor data is pre-processed to correct for signal attenuation and low level noise. For this, a matrix equalisation of the signal is performed in order to take into account the signal attenuation due to the distance and the transducer lobe pattern characteristics (separately as Tx and Rx). This equalisation can also help to limit the "field of view" of the sensors. Then a further matrix is applied to eliminate any unwanted low level ultrasound signals. For these corrections, it is preferred to apply the equalisation and noise error correction matrix over the domain of the 2D spatial matrix of the ultrasound data for each sensor (rather than simply 1D 'distance data) so that different coefficients can be applied in different portions of the field of view of each sensor.

The second step 14, referred to as "Superpose Sensor Signal Dataset on Location Matrix" requires modifying a location matrix by superposing each amplitude value of each sensor signal dataset on the location matrix at all locations representative of a possible obstacle location based on the associated respective distance value and a location of the respective sensor. The location matrix is typically a two-dimensional spatial array indicative of a region in the vicinity of the vehicle, though in embodiments where the sensor locations are distributed in at least two dimensions, the location matrix may be a three-dimensional spatial array. The location matrix is typically initialised as an empty array, and is modified by determining the possible obstacle locations implied by each sensor signal dataset when considered separately. In the case of a monostatic configuration of a sensor, the possible obstacle locations will take the form of an arc in 2D (or a portion of a spherical shell in 3D) because the obstacle may be located at any point along the arc (or shell) and give rise to the observed amplitude value and indicated distance (or time) value. Similarly, in a bistatic configuration of a sensor, the possible obstacle locations will take the form of an ellipse in 2D (or a portion of the shell of the corresponding 3D ellipsoid shape). The foci of the ellipse (or ellipsoid) will be the locations of the transmitter and the corresponding receiver which receives the emitted ultrasound energy from the transmitter giving rise to that particular sensor signal dataset. This process is completed for each amplitude and distance (or time value) in each sensor signal dataset, with the location matrix being updated each time with the additional contribution from the new amplitude value until all amplitude values in all sensor signal datasets available for the current vehicle location have been included. It will be appreciated at this point that intersections of arcs (or shells) from multiple transmitter receiver pairs may represent locations of obstacles. The more intersections of arcs (or shells) at a given location in the location matrix, the greater the probability that an obstacle is located. However, it will also be appreciated that each arc may intersect other arcs at several locations, and this could lead to a false determination of an obstacle at some locations.

The third step 16, referred to as "Determine Maximum Value in Location Matrix" requires that the location of the maximum value or highest peak in the location matrix is determined. The maximum value and location thereof can be determined in any of several known ways. It will be appreciated that in some embodiments, the location of the maximum value may be determined by determining the location of the maximum value in only a region of the location matrix.

The fourth step 18, referred to as "Determine Initial Shaped Obstacle" requires that an initial shaped obstacle is determined as the location of the maximum value determined in the third step 16. As determined previously, the location where the intersections of arcs of possible obstacle locations results in the largest value in the location matrix is deterministic of an obstacle location resolved to the accuracy of a single bin in the location matrix. However, it will be appreciated that many obstacles will have an extent greater than merely a single bin in the location matrix.

The fifth step 20, referred to as "Recursively Grow Initial Shaped Obstacle" requires recursively determining locations in the location matrix around the initial shaped obstacle having a value within a predetermined threshold of the maximum value and expanding the initial shaped obstacle to include the determined locations. In one embodiment, the predetermined threshold is a percentage of the maximum value. In an alternative embodiment, the predetermined threshold is a constant offset below the maximum value. The recursive algorithm used may be analogous to a flood fill algorithm, sometimes referred to as a seed fill algorithm. In essence, the immediate neighbours outside the initial shaped obstacle (may include diagonal neighbours in some embodiments) are compared to the predetermined threshold. The shaped obstacle is expanded to include any immediate neighbours having a value greater than the predetermined threshold. Once all current neighbours for the previous shaped obstacle have been considered, the process is completed with the newly expanded shaped obstacle. It will be appreciated that whilst the algorithm has been described as requiring the value of the neighbour to be greater than the predetermined threshold to be considered part of the shaped obstacle, in some embodiments, the value of the neighbour may be greater than or equal to the predetermined threshold to be considered part of the shaped obstacle.

The sixth step 22, referred to as "Determine Final Shaped Obstacle" required that the final shaped obstacle is determined based on the recursive determination of the fifth step 20. In particular, when all current neighbours of the shaped obstacle have been considered and none have a value greater than the predetermined threshold, the shaped obstacle at that stage becomes the final shaped obstacle. It is considered that the final shaped obstacle represents a good approximation of the true extent of the obstacle including the location of the maximum value identified in the third step 16.

The seventh step 24, referred to as "Populate Obstacle Matrix" requires that an obstacle matrix is populated at all locations encompassed by the final shaped obstacle. The obstacle matrix is a spatial array similar to the location matrix, and typically represents the same region in the vicinity of the vehicle. As with the location matrix, the obstacle matrix may be two or three-dimensional as desired. The resolution of the obstacle matrix may be the same as the location matrix, or may be less than that of the location matrix. In some embodiments, the obstacle matrix is populated with the same value at any location encompassed by the final shaped obstacle, regardless of the corresponding amplitude values in the location matrix.

The feedback step 26, referred to as "Calculate Further Location Matrix" requires that, after the final shaped obstacle has been determined in the sixth step 22, calculating a further location matrix not including at least some of the amplitude values in the sensor signal datasets which represented a possible obstacle location at the peak location, whereby to identify any remaining peaks in the further location matrix indicative of a further obstacle. The further location matrix may be determined by subtracting or cleaning/eliminating values from the location matrix which contributed to the peak resulting in the maximum value identified previously in the third step 16. Alternatively, a new location matrix may be created by essentially repeating the second step 14, but without including any of the values which contributed to the peak resulting in the maximum value identified previously in the third step 16. In some embodiments, the amplitude values not included when calculating the further location matrix also includes any amplitude values which contributed to the amplitude value in the location matrix at any of the locations encompassed by the previously determined final shaped obstacle as part of the sixth step 22.

Whilst the feedback step 26 is shown in Figure 1 as occurring after the seventh step 24, it will be appreciated that it may instead occur before, or in parallel with the seventh step 24 because the feedback step 26 is not dependent on anything done as part of the seventh step 24.

Following the feedback step 26, during which the location matrix has been either recalculated from scratch or modified as described previously, the third step 16, fourth step 18, fifth step 20, sixth step 22 and seventh step 24 are repeated to identify further obstacles. As additional final shaped obstacles are determined in the sixth step, the obstacle matrix is further populated such that it may contain indications of multiple obstacles in the vicinity of the vehicle.

It will be appreciated that method 10 as shown in Figure 1 appears to include an infinite loop comprising third to seventh steps 16, 18, 20, 22, 24 and feedback step 26, however a further step (not shown) may be included in the method 10 to escape from the infinite loop in certain conditions. For example, the method 10 may be stopped when a predetermined number of obstacles has been identified, or when the further location matrix contains only values below a preset minimum threshold level. In one example, the method 10 may be stopped when the obstacles already identified restrict the manoeuvre of the vehicle to such an extent that the vehicle is unable to manoeuvre around the currently identified obstacles without changing the overall direction of travel from backwards to forwards (or *vice versa*), regardless of any subsequently identified obstacles. In a further example, the method 10 may be stopped when the vehicle changes location, such that the data included in the location matrix is no longer accurate and does not represent the vicinity of the vehicle.

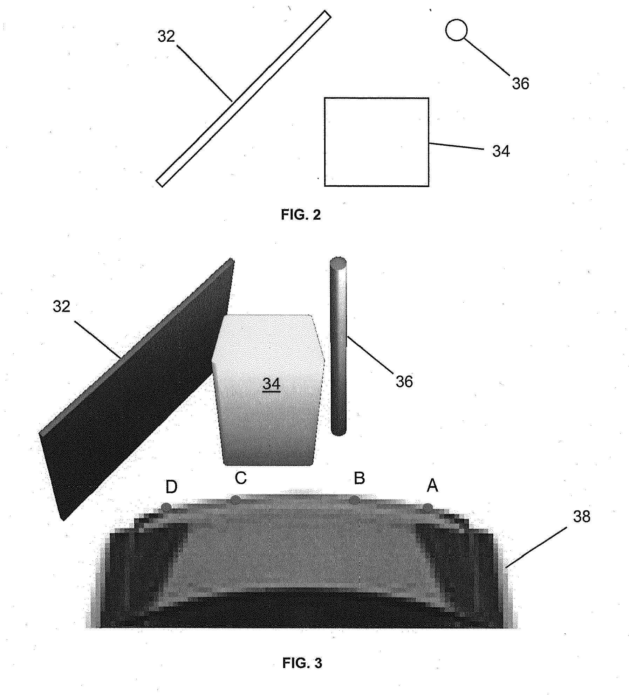

Figure 2 is a diagram of three obstacles positioned in the vicinity of a vehicle, viewed from a plan view. The obstacles comprise a flat plate 32, a cuboid 34 and a cylindrical pole 36. The flat plate 32 is provided at an angle of approximately 45 degrees and positioned adjacent the cuboid 34. The cylindrical pole 36 is located on the opposite side of the cuboid 34 to the flat plate 32, and back from the cuboid 34. This setup is further illustrated in Figure 3, which shows the obstacles of Figure 2, shown in the vicinity of a vehicle 38, which is a car. Only the rear of the vehicle 38 is shown in Figure 3. In relation to the forward direction of the vehicle 38, the locations of a rear left sensor A, a rear centre-left sensor B, a rear centre-right sensor C and a rear right sensor D are shown adjacent to a rear bumper of the vehicle 38. Four sensors are suitable for determining a two-dimensional location for the obstacles in the vicinity of the rear of the vehicle 38. Nevertheless, some embodiments may include a different number of sensors (either fewer or more). In some embodiments, sensors may additionally or alternatively be located in other areas of the vehicle 38, for example around a front of the vehicle 38. In one embodiment, sensors may be located all around the edge of the vehicle 38, such that obstacles in any location around the horizontal vicinity of the vehicle may be identified. Each of the sensors A, B, C and D is an ultrasound sensor comprising an ultrasound transmitter and an ultrasound receiver. The ultrasound transmitter and receiver are substantially co-located such that ultrasound energy emitted by the ultrasound transmitter, reflected off an obstacle and detected by the ultrasound receiver in the same ultrasound sensor may be treated as behaving in a monostatic configuration.

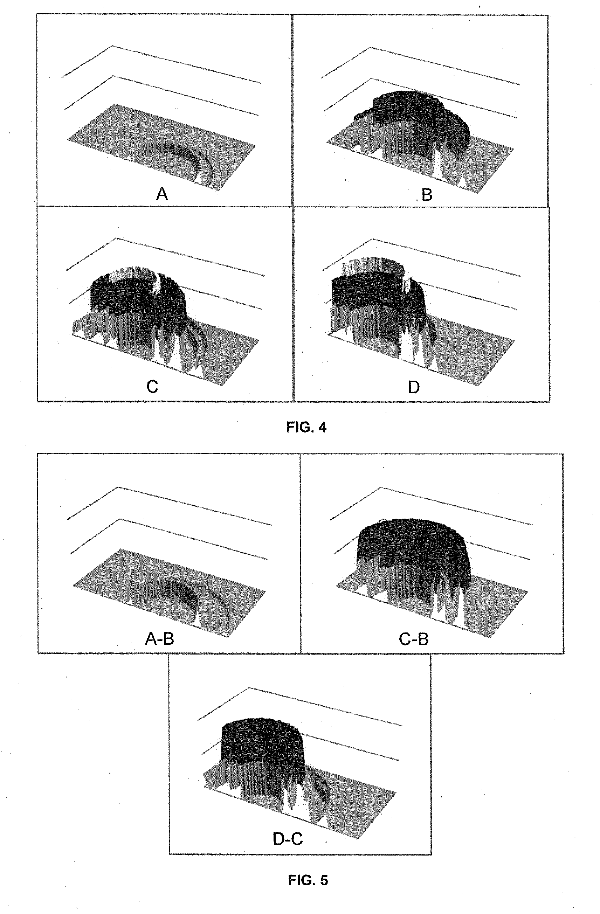

Figure 4 is a diagram showing monostatic response plots for each of the sensor locations A to D for the setup shown in Figures 2 and 3. The top left plot (labelled A) shows the possible obstacle locations indicated by the sensor signal dataset received from the ultrasound receiver located at position A in Figure 3 and resulting from emitted ultrasound energy from the ultrasound transmitter also located at position A in Figure 3. The amplitudes are relatively low because only a small area of the cuboid 34 and the cylindrical pole 36 face directly towards position A. It is possible that only two arcs are present in the plot because the cuboid 34 substantially obscures the flat plate 32 and so ultrasound energy cannot reach the flat plate 32.

The top right plot (labelled B) shows the possible obstacle locations indicated by the sensor signal dataset received from the ultrasound receiver located at position B in Figure 3 and resulting from emitted ultrasound energy from the ultrasound transmitter also located at position B in Figure 3. The amplitudes are higher than those in the top left plot. This is possibly because a greater surface area of the objects visible from position B faces towards position B than in the top left plot. Again, it is possible that only two arcs are present in the plot because the cuboid 34 substantially obscures the flat plate 32 and so ultrasound energy cannot reach the flat plate 32.

The bottom left plot (labelled C) shows the possible obstacle locations indicated by the sensor signal dataset received from the ultrasound receiver located at position C in Figure 3 and resulting from emitted ultrasound energy from the ultrasound transmitter also located at position C in Figure 3. The highest amplitudes are higher than those in the top right plot. This is possibly because a greater surface area of the objects visible from position C faces towards position C than in the top right plot. Multiple reflections can be seen in the bottom left plot, and it is not possible to determine with certainty which obstacle each reflection is caused by.

The bottom right plot (labelled D) shows the possible obstacle locations indicated by the sensor signal dataset received from the ultrasound receiver located at position D in Figure 3 and resulting from emitted ultrasound energy from the ultrasound transmitter also located at position D in Figure 3. The amplitudes are higher than those in the top left plot. This is possibly because a greater surface area of the objects visible from position D faces towards position D. Multiple reflections can be seen in the bottom right plot, and it is not possible to determine with certainty which obstacle each reflection is caused by.

Figure 5 is a diagram showing bistatic response plots for the sensor pairs A-B, C-B and D-C for the setup shown in Figures 2 and 3. The plots shown in Figure 5 are determined in substantially the same way as for the plots of Figure 4 apart from the hereinafter described differences. Each plot is determined based on the possible obstacle locations based on the ultrasound energy received at a receiver position for a first sensor location, the ultrasound energy having been emitted from a transmitter position for a second sensor location positioned apart from the first sensor location. In particular, in the top left plot, one of the transmitter and receiver is location at location A and the other of the transmitter and receiver is located at location B. In the top right plot, one of the transmitter and receiver is location at location C and the other of the transmitter and receiver is located at location B. In the bottom plot, one of the transmitter and receiver is location at location D and the other of the transmitter and receiver is located at location C. Instead of the circular arcs seen in the plots of Figure 4, the plots of Figure 5 feature elliptical arcs, where the foci of the ellipses are located at the two positions. The centre of the ellipse is therefore at the mid-point between the two sensor positions.

In this way, it is possible to determine seven different sets of arcs (both circular and elliptical) having seven different centre locations. Points of intersection between the arcs can represent possible obstacle locations.

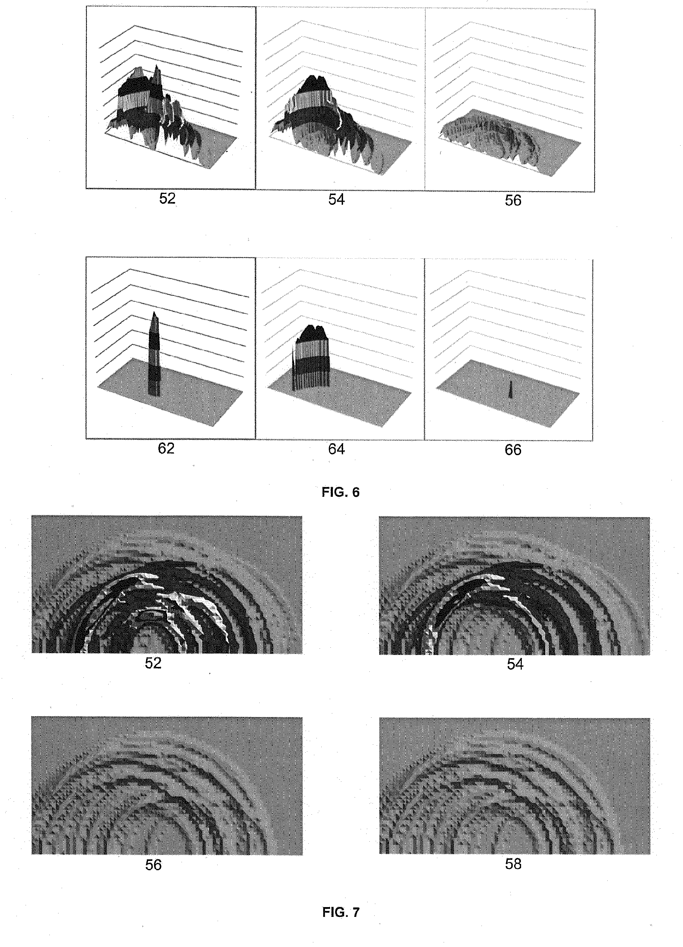

Figure 6 is a diagram showing plots of a location matrix including responses relating to obstacles observed from sensors A to D, and plots of the extracted obstacles for the setup shown in Figures 2 and 3. The plot of the location matrix shown in the top-left plot (labelled 52) has been determined in accordance with the second step 14 described previously. The top-left plot features several peaks, each of which may be indicative of a possible obstacle location. The bottom row of plots illustrates the values in the location matrix corresponding to the locations for the final shaped obstacle determined by progressing from the second step 14 to the sixth step 22. The bottom-left plot shows the first shaped obstacle 62, the bottom-centre plot shows the second shaped obstacle 64 and the bottom-right plot shows the third shaped obstacle 66. It will be appreciated that these values need not actually be extracted, but are shown for illustrating the process and steps involved in performing the method described herein.

The top-centre plot illustrates a first iteration of the further location matrix. When forming the further location matrix, any of the amplitude values in the sensor signal dataset which contributed to the maximum value determined in the third step 16 used to determine the first shaped obstacle 62 seen in the bottom-left plot are not included. The result of this is that any amplitude values in the sensor signal datasets which resulted in a possible obstacle location at the location of the maximum value are now ignored in all locations when producing the updated iteration of the location matrix.

The top-right plot illustrates a second iteration of the further location matrix. When forming this location matrix, any of the amplitude values in the sensor signal dataset which contributed to either of the maximum values determined in the third steps 16 used to determine the first shaped obstacle 62 and the second shaped obstacle 64 are not included. The result of this is that any amplitude values in the sensor signal datasets which resulted in a possible obstacle location at the location of the maximum values are now ignored in all locations when producing the updated iteration of the location matrix.

It will of course be appreciated that the updated iteration of the location matrix can be determined either by modification of the current location matrix or by entirely recalculating the location matrix, as discussed previously.

Figure 7 is a diagram showing plots of the location matrix showing the location matrix as responses originating from identified obstacles are progressively not included, for the setup shown in Figures 2 and 3. The top-left plot, top-right plot and bottom-left plot of Figure 7 corresponds to the top-left plot, top-centre plot and top-right plot of Figure 6 respectively. The bottom-right plot of Figure 7 illustrates the location matrix not including ultrasound returns indicating possible obstacle locations at the maximum values representative of the first, second and third shaped obstacles. At this point, no more obstacles can be identified because all of the remaining returns are below a predetermined minimum threshold for declaring an obstacle. It will be appreciated that other ways of determining that no more obstacles will be identified are discussed previously.

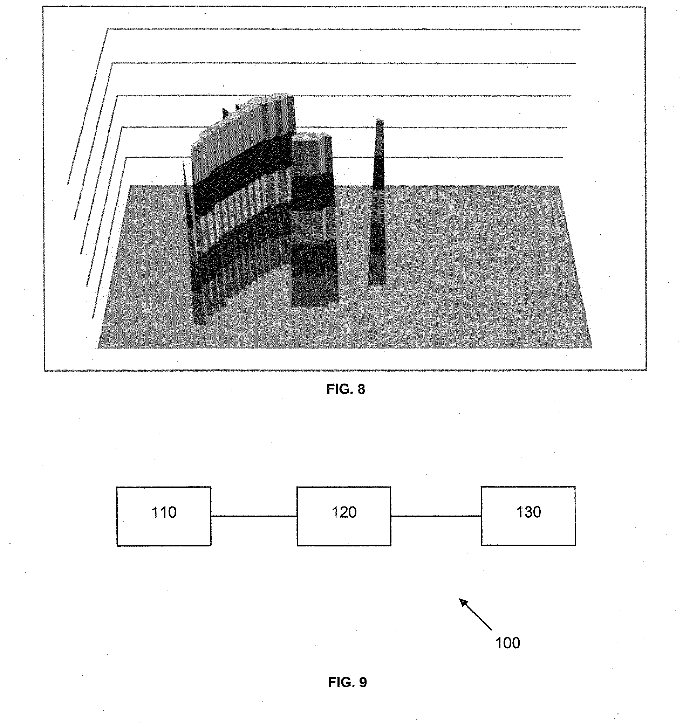

Figure 8 is a plot showing an obstacle map resulting from the extraction of obstacles seen in Figure 6. In this particular embodiment, an equal amplitude value is assigned to all obstacles identified in the obstacle matrix (rather than e.g. the detected signal amplitude values) to indicate merely the detected presence or absence of a detected object as this is what is ultimately meaningful for the end user or output system.

Figure 9 is a diagram of a system in accordance with an aspect of the present disclosure. A vehicle apparatus 100 comprises a plurality of sensors 110, a logical module 120 and a memory 130. The vehicle apparatus 100 may be mounted on a vehicle, or may be part of a vehicle. The plurality of sensors 110 are range-finding sensors, and in particular may be ultrasound sensors. In some embodiments, the plurality of sensors may be a sensor array, comprising many sensors. The logical module 120 is a module for carrying out any of the methods described previously. The logical module may be implemented by one or more processors for carrying out the methods described previously. The logical module may be implemented by a microcontroller specifically preconfigured to implement the method of the present application. Alternatively, the logical module 120 may be implemented by a general purpose CPU operating under program control of software instructions stored in memory 130. The memory 130 may be any computer memory for storing the location matrix and the obstacle matrix. The memory 130 may also store instructions which, when executed, implement the logical module 120 and cause the logical module 120 to carry out the steps of the methods disclosed previously.

As used herein, the term "computer" means any electronic device comprising at least one logical module and a memory. The logical module can include a module having one or more processors.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The scope of the invention is defined in the appended claims. Any reference to "embodiment(s)", "example(s)" or "aspect (s) of the invention" in this description not falling under the scope of the claims should be interpreted as illustrative example(s) for understanding the invention.

## Claims

1. Apparatus (100) for obstacle mapping in a vehicle, the apparatus comprising:
a memory (130) configured to store a location matrix and an obstacle matrix, each representative of an area around the vehicle; and
a logical module (120) configured to:
receive a plurality of sensor signal datasets from a plurality of respective ultrasound sensors (110), each sensor signal dataset comprising at least one amplitude value having a respective at least one associated distance value;
modify the location matrix by superposing each amplitude value of each sensor signal dataset on the location matrix at all locations representative of a possible obstacle location based on the associated respective distance value and a location of the respective ultrasound sensor;
determine an initial shaped obstacle as a peak location corresponding to a maximum value in the location matrix;
**characterised in that** the logical module is further configured to:
determine a final shaped obstacle based on recursively determining locations in the location matrix around the initial shaped obstacle having a value within a predetermined threshold of the maximum value and expanding the initial shaped obstacle to include the determined locations;
populate the obstacle matrix based on the final shaped obstacle; and
after the final shaped obstacle has been determined, calculate a further location matrix not including at least some of the amplitude values in the sensor signal datasets which represented a possible obstacle location at the peak location, whereby to identify any remaining peaks in the further location matrix indicative of a further obstacle.

2. Apparatus as claimed in claim 1, wherein the logical module (120) is further configured to:
determine a current location matrix as the further location matrix; and
recursively:
determine a current initial shaped obstacle as a current peak location corresponding to a current maximum value in the current location matrix;
determine a current final shaped obstacle based on recursively determining locations in the current location matrix around the current initial shaped obstacle having a value within the predetermined threshold of the current maximum value and expanding the current initial shaped obstacle to include the determined locations;
further populate the obstacle matrix based on the current final shaped obstacle; and
after the current final shaped obstacle has been determined, calculate a new current location matrix not including at least some of the amplitude values in the sensor signal datasets which represented a possible obstacle location at the current peak location, whereby to identify any remaining peaks in the new current location matrix indicative of a further obstacle.

3. Apparatus as claimed in claim 2, wherein the logical module (120) is configured to stop calculating the new current obstacle matrix after a predetermined number of recursions.

4. Apparatus as claimed in claim 2, wherein the logical module (120) is configured to stop calculating the new current obstacle matrix when the current maximum value is less than a predetermined threshold.

5. Apparatus as claimed in any preceding claim, wherein each sensor signal dataset has associated therewith a sensor emitter location and a sensor receiver location, and wherein in at least some of the sensor signal datasets, the sensor emitter location is spaced from the sensor receiver location.

6. Apparatus as claimed in claim 5, wherein for at least one sensor signal dataset having a sensor emitter location spaced from the sensor receiver location, the sensor emitter location is substantially identical to a sensor receiver location for a further sensor signal dataset.

7. Apparatus as claimed in any preceding claim, wherein the location matrix and the obstacle matrix are both two dimensional arrays.

8. Apparatus as claimed in any preceding claim, wherein the peak location corresponds to a maximum value in a region of the location matrix.

9. Apparatus as claimed in any preceding claim, further comprising the ultrasound sensors (110).

10. A vehicle, or one or more components of the vehicle, comprising the apparatus (100) as claimed in any preceding claim.

11. A method of obstacle mapping in a vehicle, the method comprising:
storing, in a memory (130), a location matrix and an obstacle matrix, each representative of an area around the vehicle;
receiving (12) a plurality of sensor signal datasets from a plurality of respective ultrasound sensors, each sensor signal dataset comprising at least one amplitude value having a respective at least one associated distance value;
modifying (14) the location matrix by superposing each amplitude value of each sensor signal dataset on the location matrix at all locations representative of a possible obstacle location based on the associated respective distance value and a location of the respective ultrasound sensor;
determining (18) an initial shaped obstacle as a peak location corresponding to a maximum value in the location matrix;
**characterised in that** the method further comprises:
determining (22) a final shaped obstacle based on recursively determining locations in the location matrix around the initial shaped obstacle having a value within a predetermined threshold of the maximum value and expanding the initial shaped obstacle to include the determined locations;
populating (24) the obstacle matrix based on the final shaped obstacle; and
after the final shaped obstacle has been determined, calculating (26) a further location matrix not including at least some of the amplitude values in the sensor signal datasets which represented a possible obstacle location at the peak location, whereby to identify any remaining peaks in the further location matrix indicative of a further obstacle.

12. A method as claimed in claim 11, wherein the method further comprises the steps of:
determining a current location matrix as the further location matrix; and
recursively:
determining a current initial shaped obstacle as a current peak location corresponding to a current maximum value in the current location matrix;
determining a current final shaped obstacle based on recursively determining locations in the current location matrix around the current initial shaped obstacle having a value within the predetermined threshold of the current maximum value and expanding the current initial shaped obstacle to include the determined locations;
further populating the obstacle matrix based on the current final shaped obstacle; and
after the current final shaped obstacle has been determined, calculating a new current location matrix not including at least some of the amplitude values in the sensor signal datasets which represented a possible obstacle location at the current peak location, whereby to identify any remaining peaks in the new current location matrix indicative of a further obstacle.

13. A computer-readable medium, optionally non-transitory, comprising instructions which, when executed on the apparatus of claims 1 to 10, cause one or more processors to implement the logical module as claimed in any of claims 1 to 10.

## Patentansprüche

1. Vorrichtung (100) zum Abbilden von Hindernissen in einem Fahrzeug, wobei die Vorrichtung Folgendes umfasst:
einen Speicher (130), der so konfiguriert ist, dass er eine Positionsmatrix und eine Hindernismatrix speichert, die jeweils einen Bereich um das Fahrzeug herum darstellen; und
ein logisches Modul (120), so konfiguriert ist, dass es:
eine Vielzahl von Sensorsignal-Datensätzen von einer Vielzahl entsprechender Ultraschallsensoren (110) empfängt, wobei jeder Sensorsignal-Datensatz zumindest einen Amplitudenwert mit einem entsprechenden zumindest einen zugeordneten Abstandswert umfasst;
die Positionsmatrix ändert, indem jeder Amplitudenwert jedes Sensorsignal-Datensatzes an allen Positionen in der Positionsmatrix, die eine mögliche Hindernisposition darstellen, basierend auf dem zugeordneten entsprechenden Abstandswert und einer Position des entsprechenden Ultraschallsensors überlagert wird;
ein anfänglich geformtes Hindernis als eine höchste Position bestimmt, die einem Höchstwert in der Positionsmatrix entspricht;
**dadurch gekennzeichnet, dass** das logische Modul weiter so konfiguriert ist, dass es:
ein endgültig geformtes Hindernis basierend darauf bestimmt, dass rekursiv Positionen in der Positionsmatrix um das anfänglich geformte Hindernis herum mit einem Wert innerhalb eines zuvor bestimmten Schwellenwerts des Höchstwerts bestimmt werden und das anfänglich geformte Hindernis erweitert wird, um die bestimmten Positionen einzubeziehen;
die Hindernismatrix basierend auf dem endgültig geformten Hindernis auffüllt; und
nachdem das endgültig geformte Hindernis bestimmt wurde, eine weitere Positionsmatrix berechnet, in der zumindest einige der Amplitudenwerte in den Sensorsignal-Datensätzen nicht beinhaltet sind, die eine mögliche Hindernisposition an der höchsten Position dargestellt haben, wodurch verbleibende Höchstwerte in der weiteren Positionsmatrix identifiziert werden, die ein weiteres Hindernis angeben.

2. Vorrichtung nach Anspruch 1, wobei das logische Modul (120) weiter so konfiguriert ist, dass es:
eine aktuelle Positionsmatrix als die weitere Positionsmatrix bestimmt; und
rekursiv:
ein aktuelles anfänglich geformtes Hindernis als eine aktuelle höchste Position bestimmt, die einem aktuellen Höchstwert in der aktuellen Positionsmatrix entspricht;
ein aktuelles endgültig geformtes Hindernis basierend darauf bestimmt, dass rekursiv Positionen in der aktuellen Positionsmatrix um das aktuelle anfänglich geformte Hindernis herum mit einem Wert innerhalb des zuvor bestimmten Schwellenwerts des aktuellen Höchstwerts bestimmt werden und das aktuelle anfänglich geformte Hindernis erweitert wird, um die bestimmten Positionen einzubeziehen;
die Hindernismatrix basierend auf dem aktuellen endgültig geformten Hindernis weiter auffüllt; und
nachdem das aktuelle endgültig geformte Hindernis bestimmt wurde, eine neue aktuelle Positionsmatrix berechnet, in der zumindest einige der Amplitudenwerte in den Sensorsignal-Datensätzen nicht beinhaltet sind, die eine mögliche Hindernisposition an der aktuellen höchsten Position dargestellt haben, wodurch verbleibende Höchstwerte in der neuen aktuellen Positionsmatrix identifiziert werden, die ein weiteres Hindernis angeben.

3. Vorrichtung nach Anspruch 2, wobei das logische Modul (120) so konfiguriert ist, dass es nach einer zuvor bestimmten Anzahl an Rekursionen aufhört, die neue aktuelle Hindernismatrix zu berechnen.

4. Vorrichtung nach Anspruch 2, wobei das logische Modul (120) so konfiguriert ist, dass es aufhört, die neue aktuelle Hindernismatrix zu berechnen, wenn der aktuelle Höchstwert unter einem zuvor bestimmten Schwellenwert liegt.

5. Vorrichtung nach einem vorhergehenden Anspruch, wobei jeder Sensorsignal-Datensatz eine zugeordnete Sensorsenderposition und eine Sensorempfängerposition aufweist und wobei bei zumindest einigen der Sensorsignal-Datensätze die Sensorsenderposition von der Sensorempfängerposition beabstandet ist.

6. Vorrichtung nach Anspruch 5, wobei bei zumindest einem Sensorsignal-Datensatz mit einer von der Sensorempfängerposition beabstandeten Sensorsenderposition die Sensorsenderposition im Wesentlichen identisch mit einer Sensorempfängerposition eines weiteren Sensorsignal-Datensatzes ist.

7. Vorrichtung nach einem vorhergehenden Anspruch, wobei es sich sowohl bei der Positionsmatrix als auch bei der Hindernismatrix um zweidimensionale Anordnungen handelt.

8. Vorrichtung nach einem vorhergehenden Anspruch, wobei die höchste Position einem Höchstwert in einem Bereich der Positionsmatrix entspricht.

9. Vorrichtung nach einem vorhergehenden Anspruch, weiter umfassend die Ultraschallsensoren (110).

10. Ein Fahrzeug oder eine oder mehrere Komponenten des Fahrzeugs, umfassend die Vorrichtung (100) nach einem vorhergehenden Anspruch.

11. Ein Verfahren zum Abbilden von Hindernissen in einem Fahrzeug, wobei das Verfahren Folgendes umfasst:
Speichern, in einem Speicher (130), einer Positionsmatrix und einer Hindernismatrix, die jeweils einen Bereich um das Fahrzeug herum darstellen;
Empfangen (12) einer Vielzahl von Sensorsignal-Datensätzen von einer Vielzahl entsprechender Ultraschallsensoren, wobei jeder Sensorsignal-Datensatz zumindest einen Amplitudenwert mit einem entsprechenden zumindest einen zugeordneten Abstandswert umfasst;
Ändern (14) der Positionsmatrix, indem jeder Amplitudenwert jedes Sensorsignal-Datensatzes an allen Positionen in der Positionsmatrix, die eine mögliche Hindernisposition darstellen, basierend auf dem zugeordneten entsprechenden Abstandswert und einer Position des entsprechenden Ultraschallsensors überlagert wird;
Bestimmen (18) eines anfänglich geformten Hindernisses als eine höchste Position, die einem Höchstwert in der Positionsmatrix entspricht;
**dadurch gekennzeichnet, dass** das Verfahren weiter Folgendes umfasst:
Bestimmen (22) eines endgültig geformten Hindernisses basierend darauf, dass rekursiv Positionen in der Positionsmatrix um das anfänglich geformte Hindernis herum mit einem Wert innerhalb eines zuvor bestimmten Schwellenwerts des Höchstwerts bestimmt werden und das anfänglich geformte Hindernis erweitert wird, um die bestimmten Positionen einzubeziehen;
Auffüllen (24) der Hindernismatrix basierend auf dem endgültig geformten Hindernis; und
nachdem das endgültig geformte Hindernis bestimmt wurde, Berechnen (26) einer weiteren Positionsmatrix, in der zumindest einige der Amplitudenwerte in den Sensorsignal-Datensätzen nicht beinhaltet sind, die eine mögliche Hindernisposition an der höchsten Position dargestellt haben, wodurch verbleibende Höchstwerte in der weiteren Positionsmatrix identifiziert werden, die ein weiteres Hindernis angeben.

12. Ein Verfahren nach Anspruch 11, wobei das Verfahren weiter die folgenden Schritte umfasst:
Bestimmen einer aktuellen Positionsmatrix als die weitere Positionsmatrix; und
rekursiv:
Bestimmen eines aktuellen anfänglich geformten Hindernisses als eine aktuelle höchste Position, die einem aktuellen Höchstwert in der aktuellen Positionsmatrix entspricht;
Bestimmen eines aktuellen endgültig geformten Hindernisses basierend darauf, dass rekursiv Positionen in der aktuellen Positionsmatrix um das aktuelle anfänglich geformte Hindernis herum mit einem Wert innerhalb des zuvor bestimmten Schwellenwerts des aktuellen Höchstwerts bestimmt werden und das aktuelle anfänglich geformte Hindernis erweitert wird, um die bestimmten Positionen einzubeziehen;
weiteres Auffüllen der Hindernismatrix basierend auf dem aktuellen endgültig geformten Hindernis; und
nachdem das aktuelle endgültig geformte Hindernis bestimmt wurde, Berechnen einer neuen aktuellen Positionsmatrix, in der zumindest einige der Amplitudenwerte in den Sensorsignal-Datensätzen nicht beinhaltet sind, die eine mögliche Hindernisposition an der aktuellen höchsten Position dargestellt haben, wodurch verbleibende Höchstwerte in der neuen aktuellen Positionsmatrix identifiziert werden, die ein weiteres Hindernis angeben.

13. Ein computerlesbares Medium, optional nicht vorübergehend, umfassend Anweisungen, die bei der Ausführung auf der Vorrichtung nach den Ansprüchen 1 bis 10 veranlassen, dass eine oder mehrere Verarbeitungseinheiten das logische Modul nach einem der Ansprüche 1 bis 10 implementieren.

## Revendications

1. Un appareil (100) de cartographie d'obstacles dans un véhicule, l'appareil comprenant :
une mémoire (130) configurée de façon à conserver en mémoire une matrice d'emplacements et une matrice d'obstacles, chacune d'elles étant représentative d'une zone autour du véhicule, et
un module logique (120) configuré de façon à :
recevoir une pluralité d'ensembles de données de signaux de capteurs à partir d'une pluralité de capteurs à ultrasons respectifs (110), chaque ensemble de données de signaux de capteurs comprenant au moins une valeur d'amplitude possédant une au moins une valeur de distance associée respective,
modifier la matrice d'emplacements par la superposition de chaque valeur d'amplitude de chaque ensemble de données de signaux de capteurs sur la matrice d'emplacements au niveau de la totalité des emplacements représentatifs d'un emplacement d'obstacle possible en fonction de la valeur de distance respective associée et d'un emplacement du capteur à ultrasons respectif,
déterminer un obstacle formé initial en tant qu'emplacement de crête correspondant à une valeur maximale dans la matrice d'emplacements, **caractérisé en ce que** le module logique est configuré en outre de façon à :
déterminer un obstacle formé final en fonction de la détermination récursive d'emplacements dans la matrice d'emplacements autour de l'obstacle formé initial possédant une valeur à l'intérieur d'un seuil prédéterminé de la valeur maximale et étendre l'obstacle formé initial de façon à inclure les emplacements déterminés,
garnir la matrice d'obstacles en fonction de l'obstacle formé final, et
après la détermination de l'obstacle formé final, calculer une autre matrice d'emplacements ne comprenant pas au moins certaines des valeurs d'amplitude dans les ensembles de données de signaux de capteurs qui représentaient un emplacement d'obstacle possible au niveau de l'emplacement de crête, grâce à quoi identifier toutes crêtes restantes dans l'autre matrice d'emplacements indicatives d'un autre obstacle.

2. L'appareil selon la Revendication 1, où le module logique (120) est configuré en outre de façon à :
déterminer une matrice d'emplacements courante en tant que l'autre matrice d'emplacements, et
de manière récursive :
déterminer un obstacle formé initial courant en tant qu'emplacement de crête courant correspondant à une valeur maximale courante dans la matrice d'emplacements courante,
déterminer un obstacle formé final courant en fonction de la détermination récursive d'emplacements dans la matrice d'emplacements courante autour de l'obstacle formé initial courant possédant une valeur à l'intérieur du seuil prédéterminé de la valeur maximale courante et étendre l'obstacle formé initial courant de façon à inclure les emplacements déterminés,
garnir encore la matrice d'obstacles en fonction de l'obstacle formé final courant, et
après la détermination de l'obstacle formé final courant, calculer une nouvelle matrice d'emplacements courante ne comprenant pas au moins certaines des valeurs d'amplitude dans les ensembles de données de signaux de capteurs qui représentaient un emplacement d'obstacle possible au niveau de l'emplacement de crête courant, grâce à quoi identifier toutes crêtes restantes dans la nouvelle matrice d'emplacements courante indicatives d'un autre obstacle.

3. L'appareil selon la Revendication 2, où le module logique (120) est configuré de façon à arrêter le calcul de la nouvelle matrice d'obstacles courante après un nombre prédéterminé de récursions.

4. L'appareil selon la Revendication 2, où le module logique (120) est configuré de façon à arrêter le calcul de la nouvelle matrice d'obstacles courante lorsque la valeur maximale courante est inférieure à un seuil prédéterminé.

5. L'appareil selon l'une quelconque des Revendications précédentes, où chaque ensemble de données de signaux de capteurs possède associés à celui-ci un emplacement d'émetteur de capteur et un emplacement de récepteur de capteur, et où, dans au moins certains des ensembles de données de signaux de capteur, l'emplacement d'émetteur de capteur est espacé de l'emplacement de récepteur de capteur.

6. L'appareil selon la Revendication 5, où, pour au moins un ensemble de données de signaux de capteurs possédant un emplacement d'émetteur de capteur espacé de l'emplacement de récepteur de capteur, l'emplacement d'émetteur de capteur est sensiblement identique à un emplacement de récepteur de capteur pour un autre ensemble de données de signaux de capteurs.

7. L'appareil selon l'une quelconque des Revendications précédentes, où la matrice d'emplacements et la matrice d'obstacles sont toutes les deux des tableaux bidimensionnels.

8. L'appareil selon l'une quelconque des Revendications précédentes, où l'emplacement de crête correspond à une valeur maximale dans une zone de la matrice d'emplacements.

9. L'appareil selon l'une quelconque des Revendications précédentes, comprenant en outre les capteurs à ultrasons (110).

10. Un véhicule, ou un ou plusieurs composants du véhicule, comprenant l'appareil (100) selon l'une quelconque des Revendications précédentes.

11. Un procédé de cartographie d'obstacles dans un véhicule, le procédé comprenant :
la conservation en mémoire, dans une mémoire (130), d'une matrice d'emplacements et d'une matrice d'obstacles, chacune d'elles étant représentative d'une zone autour du véhicule,
la réception (12) d'une pluralité d'ensembles de données de signaux de capteurs à partir d'une pluralité de capteurs à ultrasons respectifs, chaque ensemble de données de signaux de capteurs comprenant au moins une valeur d'amplitude possédant au moins une valeur de distance associée respective,
la modification (14) de la matrice d'emplacements par la superposition de chaque valeur d'amplitude de chaque ensemble de données de signaux de capteurs sur la matrice d'emplacements au niveau de la totalité des emplacements représentatifs d'un emplacement d'obstacle possible en fonction de la valeur de distance respective associée et d'un emplacement du capteur à ultrasons respectif,
la détermination (18) d'un obstacle formé initial en tant qu'emplacement de crête correspondant à une valeur maximale dans la matrice d'emplacements,
**caractérisé en ce que** le procédé comprend en outre :
la détermination (22) d'un obstacle formé final en fonction de la détermination récursive d'emplacements dans la matrice d'emplacements autour de l'obstacle formé initial possédant une valeur à l'intérieur d'un seuil prédéterminé de la valeur maximale et l'expansion de l'obstacle formé initial de façon à inclure les emplacements déterminés,
le garnissage (24) de la matrice d'obstacles en fonction de l'obstacle formé final, et
après la détermination de l'obstacle formé final, le calcul (26) d'une autre matrice d'emplacements ne comprenant pas au moins certaines des valeurs d'amplitude dans les ensembles de données de signaux de capteurs qui représentaient un emplacement d'obstacle possible au niveau de l'emplacement de crête, grâce à quoi identifier toutes crêtes restantes dans l'autre matrice d'emplacements indicatives d'un autre obstacle.

12. Un procédé selon la Revendication 11, où le procédé comprend en outre les opérations suivantes :
la détermination d'une matrice d'emplacements courante en tant que l'autre matrice d'emplacements, et
de manière récursive :
la détermination d'un obstacle formé initial courant en tant qu'emplacement de crête courant correspondant à une valeur maximale courante dans la matrice d'emplacements courante,
la détermination d'un obstacle formé final courant en fonction de la détermination récursive d'emplacements dans la matrice d'emplacements courante autour de l'obstacle formé initial courant possédant une valeur à l'intérieur du seuil prédéterminé de la valeur maximale courante et l'expansion de l'obstacle formé initial courant de façon à inclure les emplacements déterminés,
le garnissage encore de la matrice d'obstacles en fonction de l'obstacle formé final courant, et
après la détermination de l'obstacle formé final courant, le calcul d'une nouvelle matrice d'emplacements courante ne comprenant pas au moins certaines des valeurs d'amplitude dans les ensembles de données de signaux de capteurs qui représentaient un emplacement d'obstacle possible au niveau de l'emplacement de crête courant, grâce à quoi identifier toutes crêtes restantes dans la nouvelle matrice d'emplacements courante indicatives d'un autre obstacle.

13. Un support lisible par ordinateur, éventuellement non transitoire, contenant des instructions qui, lorsqu'elles sont exécutées sur l'appareil selon les Revendications 1 à 10, amènent un ou plusieurs processeurs à mettre en oeuvre le module logique selon l'une quelconque des Revendications 1 à 10.
